(19) Europäisches Patentamt
European Patent Office
Office européen des brevets

(11) **EP 4 043 395 A1**

(12) **EUROPEAN PATENT APPLICATION**
published in accordance with Art. 153(4) EPC

(43) Date of publication:
**17.08.2022 Bulletin 2022/33**

(51) International Patent Classification (IPC):
***C01B 32/05*** (2017.01)    ***B01J 35/10*** (2006.01)
***B01J 20/28*** (2006.01)

(21) Application number: **20874437.5**

(52) Cooperative Patent Classification (CPC):
**Y02C 20/40**

(22) Date of filing: **09.07.2020**

(86) International application number:
**PCT/ES2020/070443**

(87) International publication number:
**WO 2021/069770 (15.04.2021 Gazette 2021/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.10.2019 ES 201930887**

(71) Applicant: **CONSEJO SUPERIOR DE INVESTIGACIONES CIENTIFICAS**
**28006 Madrid (ES)**

(72) Inventors:
• **MENÉNDEZ DÍAZ, José Ángel**
**33011 Oviedo (Asturias) (ES)**
• **MONTES MORÁN, Miguel Ángel**
**33011 Oviedo (Asturias) (ES)**
• **ARENILLAS DE LA PUENTE, Ana**
**33011 Oviedo (Asturias) (ES)**
• **RAMÍREZ MONTOYA, Luis Adrián**
**33011 Oviedo (Asturias) (ES)**
• **LLAMAS UNZUETA, Raúl**
**33011 Oviedo (Asturias) (ES)**

(74) Representative: **Pons**
**Glorieta Rubén Darío 4**
**28010 Madrid (ES)**

(54) **POROUS SHAPED CARBON MONOLITH OBTAINED FROM LACTOSERUM, METHOD OF OBTAINMENT AND USES**

(57) The present invention relates to a porous shaped carbon monolith obtained from lactoserum powder, to the method for obtaining it and to its uses as scaffold in cell tissue engineering, as a gas or liquid filter, as a molecular sieve, as a catalyst support or as a catalyst. The present invention falls within the field of the carbon materials and of industrial waste recovery.

**Description**

The present invention relates to a porous shaped carbon monolith obtained from lactoserum powder, to the method for obtaining it and to its uses as scaffold in cell tissue engineering, as a gas or liquid filter, as a molecular sieve, as a catalyst support or as a catalyst.

The present invention falls within the field of the carbon materials and of industrial waste recovery.

**BACKGROUND OF THE INVENTION**

Porous carbon monoliths are of great industrial interest as catalyst support, gas and liquid filters, structures for storing gases, structure for manufacturing electrodes, etc. Porous carbon monoliths exhibit adsorption capacities and mass transfer resistances equivalent to those obtained in beds prepared from granular adsorbents/catalysts. However, the pressure drop of reactors containing monoliths is very small, between 5-10% of the pressure drop of granular beds that exhibit the same performance in terms of bed capacity. This entails an indisputable advantage of porous carbon monoliths compared to, for example, activated carbons or granular catalysts since the lower pressure drop allows working with much higher gas or liquid flows, increasing the productivity of the process.

Normally, the methods described in the literature for obtaining porous carbon monoliths fall within one of the following categories:

(i) *Use of binders, extrusion and carbonisation and/or activation.* This is one of the main methods for obtaining monoliths from carbon powder. Generally, powdered carbon particles lack self-adhesive ability, meaning that the addition of some type of binder is required. Depending on the nature of the binder (organic, inorganic or mixed), the dose thereof, as well as the rest of the variables within the monolith shaping process (temperatures, activation methods, etc.), different textural or mechanical features are obtained.

(ii) *Polymerisation of carbonaceous precursors.* Some compounds can give rise to carbon monoliths by means of a polymerisation process and subsequent carbonisation and/or activation, without having to add binders. Carbonaceous precursors can be divided into natural precursors (for example, biomass) or artificial precursors (different chemical compounds, such as phenolic resins).

(iii) *Coating.* Starting from a monolithic material, for example a ceramic, the coating method consists of immersing this monolithic material in a carbonaceous precursor, generally in liquid, gas or powder form. The carbonaceous precursor coats the surface of the monolith and adheres thereto, such that after carbonisation thereof a monolithic part with a certain content of carbon particles is obtained.

(iv) *Use of templates.*

In this case, templates are materials around which a carbonaceous precursor can polymerise, shaping a carbon-containing monolith. After this process, the monolith can be subjected to a washing method to remove the template material, finally leaving a carbon monolith with a porous structure determined by the template used.

*(v) Self Adhesive Carbon Grain.* Some authors have discovered that there are certain types of biomass where, after pre-carbonisation at relatively low temperatures (250°C), the powder particles obtained acquire a certain self-adhesive ability. This enables carbon monoliths to be obtained by applying pressure simultaneously with carbonisation.

This method requires the use of a biomass as a precursor that contains a resin or oil in the organic structure thereof and that acts as an adhesive or binder during the pre-carbonisation step. Moreover, carbonisation must take place under pressure, since otherwise the monolithic structure generated in pre-carbonisation is not preserved. However, the monoliths obtained by means of this method exhibit poor mechanical properties.

Therefore, the development of new carbon monoliths and new methods for obtaining activated porous carbon monoliths are required.

**DESCRIPTION OF THE INVENTION**

The object of the present invention relates to a shaped carbon monolith with a specific porosity and pore size, which is obtained from lactoserum. Lactoserum is a by-product in the production of cheeses, yoghurts and other dairy derivatives that, only in the European Union, exceeds 75 Mt/year; since for every 10 litres of milk, approximately 1 kg of cheese and 9 litres of lactoserum are produced, with a solid matter content of approximately 10% by weight, the remaining 90% being water. Within the solid matter content, 10% are proteins, in other words, lactoserum powder comprises only 10% protein. Accordingly, said shaped carbon monolith has a percentage by weight of nitrogen between 1% and 4%, which mainly comes from lactoserum proteins.

The first aspect of the present invention relates to a carbon monolith (C), obtained from lactoserum powder with a moisture content between 2% and 10% by weight, characterised in that it has:

- a porosity between 50% and 85%,
- macropores with a size between 50 $\mu$m and 500 $\mu$m,
- mesopores with a size between 2 nm and 50 nm, and
- a percentage by weight of nitrogen between 1% and 4%, and
- micropores with a size less than or equal to 2 nm, preferably between 0.1 nm and 2 nm.

These features of the carbon monolith give it high permeability (1-100 Darcys) which would enable it to be used as an alternative to adsorption/catalysis beds based on granular materials. The macroporosity present in the resulting monoliths is suitable for use thereof as scaffold for growing cell tissues. The presence of N in these concentrations makes the electrical conductivity of the carbon monolith up to 10 times greater than that of a similar carbon with a lower percentage by weight of nitrogen.

Moreover, the carbon monolith is characterised in that it has micropores with a size less than or equal to 2 nm, preferably between 0.1 nm and 2 nm. Microporosity is essential in the processes of adsorption and/or catalysis of chemical compounds.

In another preferred embodiment of the monolith of the present invention, it is characterised in that it further comprises metals in a metallic state selected from Ni, Cu, Zn, Fe, Co, Ti, Pd, Mn, Rh, Ir, Ru, Os, V, Ag, Au, Pt, Cd, Mo, Al and a combination thereof, wherein said metals are homogeneously distributed in the monolith. Preferably, the metals are in a percentage by weight between 0.5% and 30% by weight in the monolith. Metal-doped monoliths are likely to be used as heterogeneous catalysts in chemical reactions. These metal-doped monoliths exhibit permeabilities higher than the particle beds commonly used in the industry. This means that much larger flows of reagents can be used with the same bed capacity. The shaped monoliths of the present invention possess porosities comprised between 50% and 85%; He densities between 1.44 g/cm$^3$ and 2.04 g/cm$^3$, determined by means of He pycnometry at room temperature, and Hg densities between 0.73 g/cm$^3$ and 0.85 g/cm$^3$, determined by means of Hg intrusion at room temperature, which gives them intrinsic permeability comprised between 1 Darcy and 100 Darcys; enabling the gases or liquids to pass through the monolith. The intrinsic permeability of the monoliths (k) was determined based on Darcy's Law, passing an increasing flow of gas (He) through a cylindrical monolith of known dimensions, knowing that the intrinsic permeability (k) is related to the volume of gas flowing through the cross-section of the permeameter ($v_L$), the length of the monolith (L), the viscosity of the gas ($\mu_{ga}$), the final pressure ($P_L$) and the initial pressure ($P_0$), according to the expression: Darcy's equation:

$$k = 2v_L L \mu_{gas} P_L / (P_0{}^2 - P_L{}^2)$$

The monoliths of the present invention have been shaped in a mould. Moreover, the monoliths can be subsequently machined with abrasive tools, which enables the part obtained in the mould to be modified or polished. They can also be jacketed in different types of tubes or casings, for example jacketing with a thermoplastic, insertion thereof in glass or steel columns, etc., without losing the monolithic shape, or the mechanical properties, or the permeability thereof; such that they can be used as a filter or separating medium for separating gases or liquids.

Another feature of these shaped monoliths of the present invention is that they possess a point of zero charge ($pH_{pzc}$) comprised between 4.0 and 11.5. In other words, they can be basic or acidic. The point of zero charge ($pH_{pzc}$) was obtained through a process consisting of suspending 250 mg of sample in a known volume of distilled water, which was being daily increased, subjecting the suspension to constant stirring in a closed container and performing daily measurements of the pH value of the suspension. As the volume of distilled water in the suspension is increased, the pH value thereof changes until a constant value is reached that does not change when adding more distilled water. The $pH_{pzc}$ value is the value of that constant pH. This parameter is relevant when the monoliths are used as adsorbents for contaminants in the liquid phase, since the adsorption of ionic species (for example, heavy metals, anions, ionic dyes) depends on the surface charge of the adsorbent, charge that can be estimated from the point of zero charge ($pH_{pzc}$) thereof.

Another aspect of the present invention relates to the method for manufacturing the shaped carbon monolith mentioned above, which has

- a porosity between 50% and 85%,
- macropores with a size between 50 $\mu$m and 500 $\mu$m,
- mesopores with a size between 2 nm and 50 nm,

- micropores with a size less than or equal to 2 nm, preferably between 0.1 nm and 2 nm,
- and a percentage by weight of nitrogen between 1% and 4%,

wherein said method is characterised in that it comprises the following steps:

a) shaping, with the aid of a mould, lactoserum powder with a particle size between 5 $\mu$m and 200 $\mu$m and a moisture content between 2% and 10% by weight; and
b) sintering, by means of heat treatment, the product obtained in step (a), wherein the sintering of step (b) is in turn carried out in three steps (b1), (b2) and (b3),

- in step (b1) a first temperature $T_1$ less than or equal to 300°C is reached,
- in step (b2) a second temperature $T_2$ greater than the temperature $T_1$ and less than 3000°C is reached, wherein (b2) is carried out in the presence of an inert gas selected from $N_2$, Ar and He
- and in step (b3) micropores are generated

  ◦ by impregnating the product obtained in step (b1) with an activating agent selected from KOH, NaOH, $K_2CO_3$, $Na_2CO_3$, $ZnCl_2$ and $H_3PO_4$,
  ◦ and/or wherein the product obtained after step (b2) is put in contact with an oxidising atmosphere selected from water vapour or $CO_2$.

The mould used in step (a) can have any geometric shape. The particle size of the lactoserum powder is comprised between 5 $\mu$m and 200 $\mu$m. Larger or smaller particle sizes cause the resulting shapes to exhibit poorer mechanical resistance.

The lactoserum powder used in step (a) must comprise a moisture content between 2% and 10% by weight to obtain shapes with good mechanical properties.

In a preferred embodiment of the method of the present invention, in step (a), a mixture is added consisting of lactoserum powder and a first material selected from mineral coal, charcoal, activated carbon, carbon black, graphite, a carbon aerogel, carbon fibres, synthetic carbon fibres, carbon nanotubes, graphene oxide, graphene, or a combination thereof. Said first material increases the performance of the reaction. Preferably, the first material is in a percentage by weight between 1% and 90% in the mixture of step (a).

The step (b) of the method of the present invention relates to sintering the product obtained in step (a), in other words, subjecting the product obtained in step (a) to a heat treatment. Sintering, understood as the fusion of lactoserum powders, occurs from 120°C to 900°C; the higher the temperature, the stronger this attachment, and the greater the rigidity of the shaped monolith. The fact that wet lactoserum powder sinters enables the monoliths to be also obtained by means of additive manufacturing or printing of powders or powder bed fusion.

Step (b1) can be carried out in the presence of an oxidising atmosphere such as in the presence of air, since at this temperature $T_1$ the product being formed does not burn. Optionally, step (b1) is carried out in the presence of an inert gas selected from $N_2$, Ar and He.

The products obtained after step (b1) keep the shape of the mould, in other words, the products obtained up to a temperature $T_1$ of 300°C keep the shape of the mould. At higher temperatures there may be a reduction in volume, so step (b2) is preferably carried out without a mould to avoid the generation of internal stresses that break the shaped monolith that is being produced.

The main function of step (b3) is the generation of micropores by impregnating the product obtained in step (b1) with an activating agent selected from KOH, NaOH, $K_2CO_3$, $Na_2CO_3$, $ZnCl_2$ and $H_3PO_4$ and/or wherein the product obtained after step (b2) is put into contact with an oxidising atmosphere selected from water vapour or $CO_2$.

Another aspect of the present invention relates to a method for manufacturing a shaped carbon monolith that has

- a porosity between 50% and 85%,
- macropores with a size between 50 $\mu$m and 500 $\mu$m,
- mesopores with a size between 2 nm and 50 nm,
- micropores with a size less than or equal to 2 nm, preferably between 0.1 nm and 2 nm,
- a percentage by weight of nitrogen between 1% and 4%, and
- a plurality of metals in a metallic state, in other words, metals with an oxidation state or zero charge, selected from Ni, Cu, Zn, Fe, Co, Ti, Pd, Mn, Rh, Ir, Ru, Os, V, Ag, Au, Pt, Cd, Mo, Al and a combination thereof, wherein said metals are homogeneously distributed in the monolith, preferably a percentage by weight of the second material is between 50% and 90% in the mixture of step (a).

characterised in that it comprises all the method steps mentioned above, wherein, in step (a), a second material is added selected from a metal, a metal oxide, a metal salt, an organometallic compound or a combination thereof, wherein the metal forming said metal oxide, said metal salt or said organometallic compound is selected from Ni, Cu, Zn, Fe, Co, Ti, Pd, Mn, Rh, Ir, Ru, Os, V, Ag, Au, Pt, Cd, Mo, Al and a combination thereof. As said monolith does not comprise micropores, the method lacks step (b3).

Another aspect of the present invention relates to the shaped carbon monolith obtained by the method described above.

Another aspect of the present invention relates to the use of the shaped carbon monolith that has

- a porosity between 50% and 85%,
- macropores with a size between 50 $\mu$m and 500 $\mu$m,
- mesopores with a size between 2 nm and 50 nm,
- micropores with a size less than or equal to 2 nm, preferably between 0.1 nm and 2 nm, and
- a percentage by weight of nitrogen between 1% and 4%,

as scaffold for growing cell tissues, preferably bone or cartilage.

Another aspect of the present invention relates to the use of the shaped carbon monolith that has

- a porosity between 50% and 85%,
- macropores with a size between 50 $\mu$m and 500 $\mu$m,
- mesopores with a size between 2 nm and 50 nm,
- micropores with a size less than or equal to 2 nm, preferably between 0.1 nm and 2 nm, and
- a percentage by weight of nitrogen between 1% and 4%, and as molecular sieves.

Another aspect of the present invention relates to the use of the shaped carbon monolith that has

- a porosity between 50% and 85%,
- macropores with a size between 50 $\mu$m and 500 $\mu$m,
- mesopores with a size between 2 nm and 50 nm,
- micropores with a size less than or equal to 2 nm, preferably between 0.1 nm and 2 nm, and
- a percentage by weight of nitrogen between 1% and 4%,

as a catalyst support.

Another aspect of the present invention relates to the use of the shaped carbon monolith that has

- a porosity between 50% and 85%,
- macropores with a size between 50 $\mu$m and 500 $\mu$m,
- mesopores with a size between 2 nm and 50 nm,
- micropores with a size less than or equal to 2 nm, preferably between 0.1 nm and 2 nm, and
- a percentage by weight of nitrogen between 1% and 4%,

as a filter for chemical compounds present in gaseous currents or liquid effluents.

The last aspect of the present invention relates to the use of the shaped carbon monolith that has

- a porosity between 50% and 85%,
- macropores with a size between 50 $\mu$m and 500 $\mu$m,
- mesopores with a size between 2 nm and 50 nm,
- micropores with a size less than or equal to 2 nm, preferably between 0.1 nm and 2 nm,
- a percentage by weight of nitrogen between 1% and 4% and
- a plurality of metals in a metallic state selected from Ni, Cu, Zn, Fe, Co, Ti, Pd, Mn, Rh, Ir, Ru, Os, V, Ag, Au, Pt, Cd, Mo, Al and a combination thereof, wherein said metals are homogeneously distributed in the monolith,

as a catalyst; in multiple catalysed chemical reactions.

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples and figures are provided by way of illustration and are not intended to limit the present invention.

**BRIEF DESCRIPTION OF THE FIGURES**

Figure 1. shows a porous shaped carbon in the shape of: (a) cylinder, (b) vase and (c) disc, obtained by means of sintering lactoserum powder at 750°C; (d) two parts machined from two different shapes and (e) a part inserted into a glass tube.

Figure 2. shows a SEM microphotograph of a material shaped at 1000°C.

Figure 3. shows a SEM microphotograph of a material shaped at 750°C.

Figure 4. shows a) $N_2$ adsorption isotherm at -196°C; b) pore size distribution obtained by means of Hg porosimetry of a porous shaped carbon obtained at 750°C.

Figure 5. shows consistency and abrasion indices of porous carbon monoliths obtained at 800°C and 400°C and their comparison with a cordierite monolith.

Figure 6. shows a) $N_2$ adsorption isotherm at -196°C; b) pore size distribution obtained by means of Hg porosimetry of a carbon monolith obtained by activation with $CO_2$ at 850°C.

Figure 7. shows a) $N_2$ adsorption isotherm at -196°C; b) pore size distribution obtained by means of Hg porosimetry of a carbon monolith obtained by means of activation with KOH at 750°C.

Figure 8. shows monoliths produced by means of sintering at 500°C of mixtures of wet lactoserum powder and charcoal powder in proportions of 60%, 70%, 80% and 90% by weight of charcoal in the initial mixture.

Figure 9. shows a) $N_2$ adsorption isotherm at -196°C; b) $CO_2$ adsorption isotherm at 0°C of a carbon monolith obtained from lactoserum powder sintered at 800°C.

**EXAMPLES**

The invention is illustrated below by means of assays conducted by the inventors, that demonstrate the effectiveness of the product of the invention.

**Example 1.**

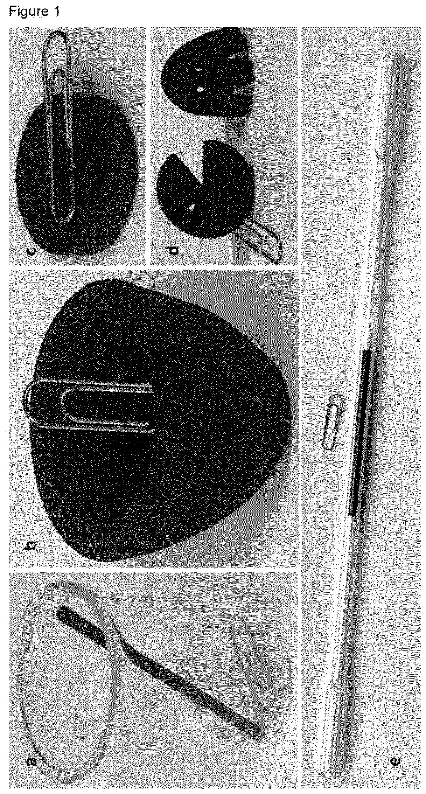

Figure 1 shows 6 different porous carbon monoliths obtained by the sintering of lactoserum powder (moisture content 2.7% by weight) at 750°C. The sintering of the parts took place in two steps. A first step in the mould, up to 300°C and a second step out of the mould, up to 750°C (PD_750). In all cases, an atmosphere of $N_2$ was used during the heat treatment and a temperature ramp of 10°C/min.

Figure 1 (d) shows two parts obtained in a similar manner which, after sintering, have been machined to obtain the shapes that are shown.

Figure 1 (e) shows a part obtained in a similar manner which, after sintering and a machining step, has been inserted into a glass tube.

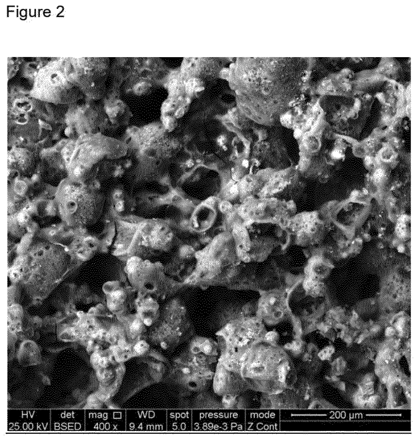

Figure 2 shows a microphotograph obtained using the Scanning Electron Microscopy (SEM) technique of a porous carbon monolith obtained by the sintering of lactoserum powder at 1000°C wherein the sintering between particles can be seen.

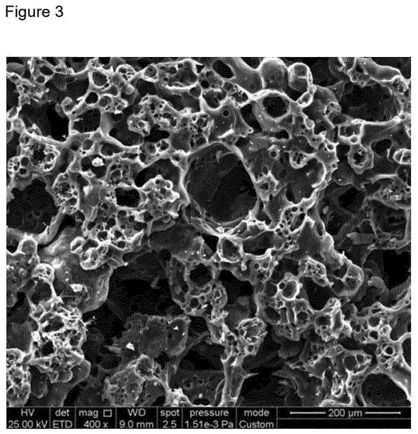

Figure 3 shows a microphotograph obtained using the Scanning Electron Microscopy (SEM) technique of a porous carbon obtained by the sintering of lactoserum powder at 750°C (PD_750) wherein the macroporous structure can be seen, with pores of up to 500 $\mu$m.

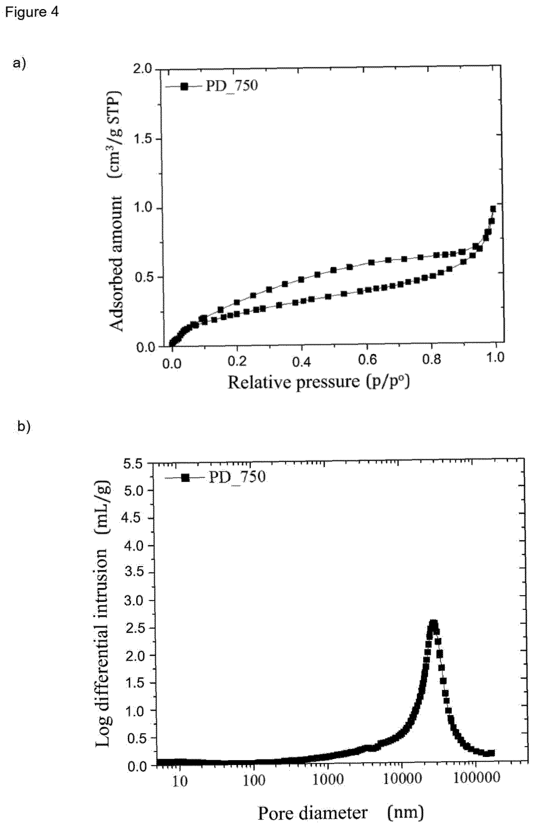

Figure 4 shows (a) the $N_2$ adsorption isotherm at -196°C and (b) the pore size distribution obtained by means of Hg porosimetry of the porous carbon obtained by the sintering of lactoserum powder at 750°C. The measurement of the $N_2$ adsorption isotherm was performed in automatic volumetric equipment, prior degassing of the sample at 120°C in a residual vacuum of 0.1 mbar for 12 h. The pore size distribution by means of Hg porosimetry was assessed based on Hg intrusion in an automatic porosimeter in the pressure range of 0.1-227 MPa, prior degassing of the sample at 120°C in a residual vacuum of 0.1 mbar for 12 h. Table 1 lists the main textural parameters of the porous carbon obtained at 750°C (PD_750). Regarding the parameters derived from $N_2$ adsorption at -196°C, the total volume of pores $V_p$ is

calculated at a relative pressure $p/p_0 = 0.95$. For the calculation of $S_{BET}$, the Brunauer-Emmett-Teller model was used on the $N_2$ isotherm data. To calculate $V_{micro}$, the Dubinin-Radushkevich model was used on the $N_2$ isotherm data. To calculate $V_{meso}$, the determined pore volume was subtracted from the $N_2$ isotherm ($V_p$) and the $V_{micro}$, $d_{micro}$ and $d_{meso}$ correspond to the mode of pore size distribution obtained using the Density Functional Theory (DFT) model applied to the $N_2$ isotherm data. The actual density value ($\rho_r$) was determined by means of He pycnometry. Regarding the textural parameters derived from Hg intrusion, $V_{Hg}$ is the total volume intruded, which corresponds to the total volume of pores larger than 4.4 nm. $V_{meso}$ is the Hg volume intruded into pores larger than 4.4 nm and smaller than 50 nm. $V_{macro}$ is the Hg volume intruded into pores larger than 50 nm. dp is the mode of pore distribution obtained by means of Hg intrusion. $\rho_{ap}$ is the bulk density measured by means of Hg intrusion. The porosity value is calculated using the ratio:

$$P = [1 - (\rho_{ap} / \rho_r)] \cdot 100$$

This PD_750 porous carbon has hardly any micropores, a small volume of mesopores and a majority of macropores with a size of 23 $\mu$m.

Table 1 Textural parameters of the porous carbon obtained by the sintering of wet lactoserum powder at 750°C.

| N2 adsorption at -196°C | $S_{BET}$ | $V_{micro}$ | Vmeso | $V_p$ | dmicro | dmeso | $\rho_r$ |
|---|---|---|---|---|---|---|---|
| | ($m^2$/g) | ($cm^3$/g) | ($cm^3$/g) | ($cm^3$/g) | (nm) | (nm) | g/$cm^3$ |
| PD_750 | <10 | - | - | - | - | - | 1.91 |
| Hg intrusion | Vmeso | $V_{macro}$ | $d_p$ | $\rho_{ap}$ | $V_{hg}$ | Porosity | |
| | ($cm^3$/g) | ($cm^3$/g) | (nm) | g/$cm^3$ | ($cm^3$/g) | (%) | |
| PD_750 | 0.04 | 1.40 | 23096 | 0.80 | 1.44 | 58 | |

Table 2 shows the main chemical characteristics of the porous carbon monolith obtained by the sintering of lactoserum powder at 750°C (PD_750). The immediate analysis was carried out in a thermobalance with controlled atmosphere; in an experiment, 50 mg of lactoserum powder are heated to 850°C at a rate of 10°C/min in an atmosphere of 100 ml/min of $N_2$ for the calculation of moisture content and volatile substances. Once the maximum temperature (850°C) has been reached, the reaction atmosphere is changed to air (100 ml/min) and the percentage of ash in the sample is counted after 0.5 h. The elemental analysis for determining the contents of C, N, H, S and O was carried out in specific equipment for the quantification of these elements (LECOCHNS-932 and LECO-TF-900). The PD_750 porous carbon exhibits a mineral composition of basically Na, K, Ca, Mg, Cl and P salts and oxides, which is determined using the Inductively Coupled Plasma Mass Spectrometry (ICP-MS) technique and using Cl-selective electrode. The PD 750 monolith exhibits a basic nature, with a point of zero charge $pH_{PZC}$ greater than 10. The point of zero charge ($pH_{pzc}$) was obtained through a process consisting of suspending 250 mg of sample in a known volume of distilled water, which was being daily increased, subjecting the suspension to constant stirring in a closed container and performing daily measurements of the pH value of the suspension. As the volume of distilled water in the suspension is increased, the pH value thereof changes until a constant value is reached that does not change when adding more distilled water. The $pH_{pzc}$ value is the value of that constant pH. This monolith is mostly made up of C, further exhibiting 13.6% by weight of O and more than 3% by weight of N.

Table 2 Chemical analysis of the porous carbon obtained by the sintering of lactoserum powder at 750°C.

| | PD750 |
|---|---|
| Immediate Analysis (%) | |
| Moisture | 9.8 |
| Ashes | 14.3 |
| Volatile substances | 8.2 |
| Fixed carbon | 67.7 |
| Elemental Analysis (%) | |
| C | 74.3 |

(continued)

|  | PD750 |
| --- | --- |
| H | 1.1 |
| N | 3.0 |
| O | 13.6 |
| S | 0.1 |
| $pH_{PZC}$ | 11.31 |

The results of the characterisation of the mechanical properties of the porous carbon monoliths prepared by the sintering of lactoserum powder at 450°C and at 800°C are shown below. For this purpose, 1 cm cubic specimens were manufactured and subjected to a mechanical resistance test consisting of introducing the specimens into a stainless steel cylindrical drum, 26 mm in diameter $\times$ 58 mm in length, along with a stainless steel ball with a diameter of 14 mm; subjecting the assembly to a frequency oscillation of 1 Hz/min, for 1 minute. After the test, by means of sieving, the fraction of pieces larger than 3 mm which, expressed as a percentage, gives a consistency index of the monolith (Ic), and the fraction corresponding to the powder smaller than 0.5 mm which, expressed as a percentage, gives an abrasion index of the monolith (Ia), are separated. These tests are done in duplicate, expressing both indices as the mean of those obtained in two tests.

Commercial cordierite $(Mg,Fe)_2Al_4Si_5O_{18}$ monoliths have been used as reference, which were subjected to the same test under the same conditions.

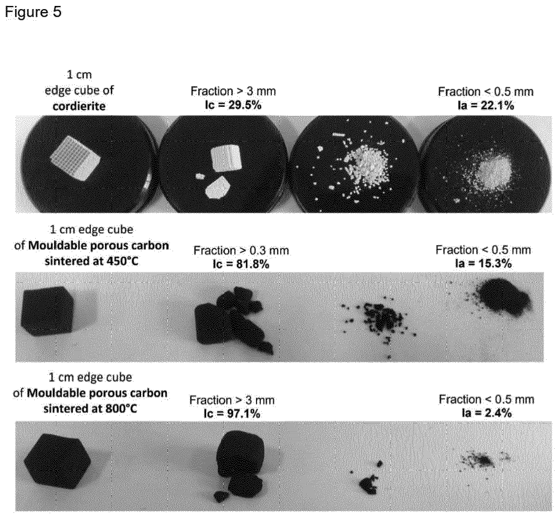

Figure 5 shows the results of cordierite and porous shapes obtained at 450°C and at 800°C after being subjected to the test described and the consistency and abrasion indices thereof.

According to these tests, it can be said that the porous carbon monoliths at 800°C exhibit a consistency that is 1.2 times higher than those obtained at 450°C and somewhat more than triple that of the cordierite monoliths; whereas the abrasion thereof is 6.3 times less than that of the shape obtained at 450°C and 9.2 times less than that of the cordierite monolith.

**Example 2.**

This example shows the features of a porous carbon monolith that is obtained by subjecting wet lactoserum powder to a heat treatment consisting of heating said wet lactoserum powder in a mould up to 850°C, using a heating ramp of 10°C/min and a flow rate of $N_2$ of 100 ml/min. After reaching this temperature, a flow rate of 50 ml/min of $CO_2$ is passed for 90 minutes and, lastly, it is cooled to room temperature using a flow rate of $N_2$ of 100 ml/min.

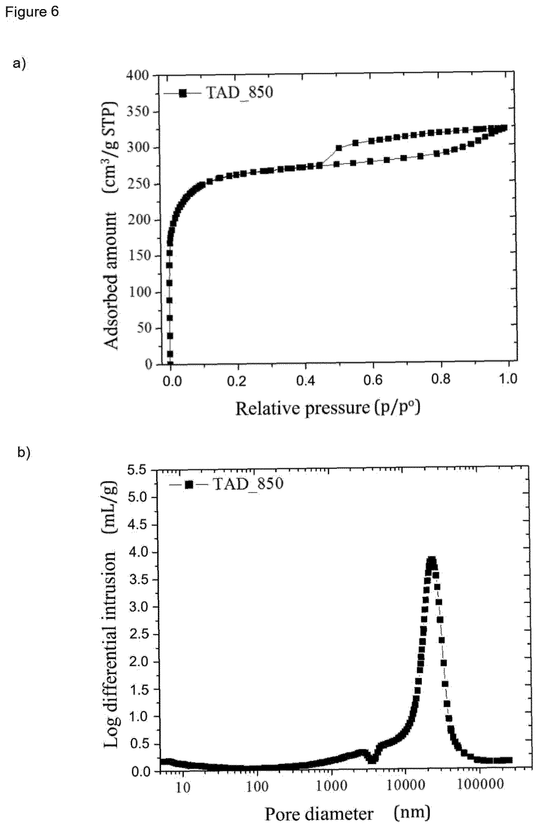

Figure 6 shows (a) the $N_2$ adsorption isotherm at -196°C and (b) the pore size distribution obtained by means of Hg porosimetry of the porous carbon obtained by the sintering of lactoserum powder at 850°C. The measurement of the $N_2$ adsorption isotherm was performed in automatic volumetric equipment, prior degassing of the sample at 120°C in a residual vacuum of 0.1 mbar for 12 h. The pore size distribution by means of Hg porosimetry was assessed based on Hg intrusion in an automatic porosimeter in the pressure range of 0.1-227 MPa, prior degassing of the sample at 120°C in a residual vacuum of 0.1 mbar for 12 h. Table 3 lists the main textural parameters of the carbon obtained at 850°C (TAD_850). Regarding the parameters derived from $N_2$ adsorption at -196°C, the total volume of pores $V_p$ is calculated at a relative pressure $p/p_0 = 0.95$. For the calculation of the BET surface or specific area $S_{BET}$, the Brunauer-Emmett-Teller model was used on the $N_2$ isotherm data. To calculate the volume of micropores $V_{micro}$, the Dubinin-Radushkevich model was used on the $N_2$ isotherm data. To calculate the volume of mesopores $V_{meso}$, the determined pore volume in the $N_2$ isotherm ($V_p$) was subtracted and $V_{micro}$, $d_{micro}$ and $d_{meso}$ correspond to the mode of micropore and mesopore size distribution, respectively, obtained using the Density Functional Theory (DFT) model applied to the $N_2$ isotherm data. The actual density value ($\rho_r$) was determined by means of He pycnometry. Regarding the textural parameters derived from Hg intrusion, $V_{Hg}$ is the total volume intruded, which corresponds to the total volume of pores larger than 4.4 nm. $V_{meso}$ is the Hg volume intruded into pores larger than 4.4 nm and smaller than 50 nm. $V_{macro}$ is the Hg volume intruded into pores larger than 50 nm. dp is the mode of pore distribution obtained by means of Hg intrusion. $\rho_{ap}$ is the bulk density measured by means of Hg intrusion. The porosity value is calculated using the ratio:

$$P = [1-(\rho_{ap} / \rho_r)]\cdot 100$$

TAD 850 porous carbon has micropores. Specifically, it has a volume of micropores $V_{micro}$ of 0.4 $cm^3$/g and a

BET specific area $S_{BET}$ larger than 1000 m²/g. Moreover, the monolith exhibits a volume of mesopores of 0.1 cm³/g, most of them of a size between 20 and 25 nm. The carbon monolith also exhibits macropores, most of them with a size of 20 μm.

Table 3 Textural parameters of the porous carbon obtained by the sintering and activation in $CO_2$ of lactoserum powder at 850°C.

| $N_2$ adsorption at -196°C | $S_{BET}$ | $V_{micro}$ | Vmeso | $V_p$ | dmicro | dmeso | $\rho_r$ |
|---|---|---|---|---|---|---|---|
| | (m²/g) | (cm³/g) | (cm³/g) | (cm³/g) | (nm) | (nm) | g/cm³ |
| TAD_850 | 1017 | 0.4 | 0.1 | 0.5 | 1.2 | 24.6 | 2.10 |
| Hg intrusion | Vmeso | $V_{macro}$ | $d_p$ | Pap | $V_{hg}$ | Porosity | |
| | (cm³/g) | (cm³/g) | (nm) | g/cm³ | (cm³/g) | (%) | |
| TAD_850 | 0.09 | 1.86 | 20541 | 0.62 | 1.95 | 70 | |

Table 4 shows the main chemical features of the porous carbon monolith obtained by the sintering and activation in $CO_2$ of lactoserum powder at 850°C (TAD_850). The immediate analysis was carried out in a thermobalance with controlled atmosphere; in an experiment, 50 mg of lactoserum powder are heated to 850°C at a rate of 10°C/min in an atmosphere of 100 ml/min of $N_2$ for the calculation of moisture content and volatile substances. Once the maximum temperature (850°C) has been reached, the reaction atmosphere is changed to air (100 ml/min) and the percentage of ash in the sample is counted after 0.5 h. The elemental analysis for determining the contents of C, N, H, S and O was carried out in specific equipment for the quantification of these elements (LECOCHNS-932 and LECO-TF-900). The TAD_850 monolith exhibits a basic nature, with a point of zero charge $pH_{PZC}$ greater than 10. The point of zero charge ($pH_{pzc}$) was obtained through a process consisting of suspending 250 mg of sample in a known volume of distilled water, which was being daily increased, subjecting the suspension to constant stirring in a closed container and performing daily measurements of the pH value of the suspension. As the volume of distilled water in the suspension is increased, the pH value thereof changes until a constant value is reached that does not change when adding more distilled water. The $pH_{pzc}$ value is the value of that constant pH. This monolith is mostly made up of C, further exhibiting 14% by weight of O and more than 3% by weight of N.

Table 4 Chemical analysis of the porous carbon obtained by the sintering of lactoserum powder at 850°C.

| | TAD_850 |
|---|---|
| Immediate Analysis (%) | |
| Moisture | 13.74 |
| Ashes | 18.12 |
| Volatile substances | 5.64 |
| Fixed carbon | 62.50 |
| Elemental Analysis (%) | |
| C | 64.5 |
| H | 0.8 |
| N | 3.0 |
| O | 14.0 |
| S | 0.2 |
| $pH_{PZC}$ | 11.34 |

To assess the biocompatibility of the prepared samples, cylindrical shapes having a diameter of 8 mm and a thickness of 1 mm were prepared at temperatures of 450°C (PW450), 750°C (PW750) and 1000°C (PW1000), which were subjected, in triplicate, to *in vitro* cytotoxicity tests following the protocol set forth in standard ISO 10993:2009 (part 5).

For this, the following experimental conditions were used:

Cell culture: Saos-2: human osteosarcoma cell line

Culture medium: McCoy's 5a Medium Modified (Gibco Life Technologies; Thermo Fisher Scientific Inc., batch: 1839876) supplemented with 10% foetal bovine serum, 100 U/mL penicillin and 100 $\mu$g/mL streptomycin sulphate (Gibco Life Technologies; Thermo Fisher Scientific Inc.).

Extraction vehicle: Culture medium with serum (as specified in ISO 10993-12, section 10.3: Extraction conditions and methods and in ISO 10993-5, section 4.2: Preparation of liquid extracts of the material).

Extraction conditions: Temperature 37°C duration 24h (as specified in ISO 10993-12, section 10.3: Extraction conditions and methods).

Sterilisation: Autoclave, 121°C, 20 minutes

Test quality: The following controls were used to ensure the quality of the test: The following controls were used to ensure the quality of the test: Blanks (wells with extraction vehicle, no sample), seeded on both sides of the culture plate. Cytotoxicity positive control: extraction vehicle with Triton X100 (0.1% v/v), 3 replicates. Cytotoxicity negative control: fresh culture medium.

Qualitative evaluation. Microscopic examination. The change compared to normal morphology was recorded as described in ISO 10993-5, subsection 8.5, table 1: Determination of cytotoxicity, grading the reactivity from 0 to 4 (none-slight-mild-moderate-severe). The 3 samples showed a 0 reactivity grade, i.e., no reactivity. Quantitative evaluation. Cell viability was determined using the neutral red uptake method. The % viability (NRU, Neutral Red Uptake) was calculated using the following formula: %Viability = (OD540sample/OD540blank)×100 where OD is the optical density. The mean % viability obtained was 96.5 for the PW450 sample, 94.0 for the PW750 sample and 100.3 for the PW1000 sample.

According to standard ISO 10993-5, a numerical grade less than 2 (qualitative evaluation) and a relative cell viability for the highest concentration of the sample extract (100% extract) greater than 70% (quantitative evaluation) indicate that the material does not possess cytotoxic potential. Therefore, according to the results obtained in this test, the tested material should be considered non-cytotoxic and, therefore, compatible with bio applications, for example as scaffold in cell tissue engineering.

**Example 3.**

The features of a porous carbon monolith obtained by subjecting a pre-shaped lactoserum powder obtained at 450°C (PD_450) to an impregnation process with a chemical activator, in this case KOH, are shown below. The impregnation is carried out in a liquid phase at 80°C under constant stirring for 2 h, first diluting the KOH in water to subsequently add the pre-shaped powder in a 1:2 (PD_450:KOH) ratio by weight. Once the impregnation process was finished, it was dried in a conventional oven at 100°C for 12 h to subsequently carbonise at 750°C, using a heating ramp of 10°C/min and a flow rate of $N_2$ of 100 ml/min. The cooling is carried out using the same flow rate of $N_2$ (100 ml/min) as during heating. Lastly, an exhaustive washing of the sample is carried out with 1M HCl and water in the presence of ultrasound until the remaining KOH is removed.

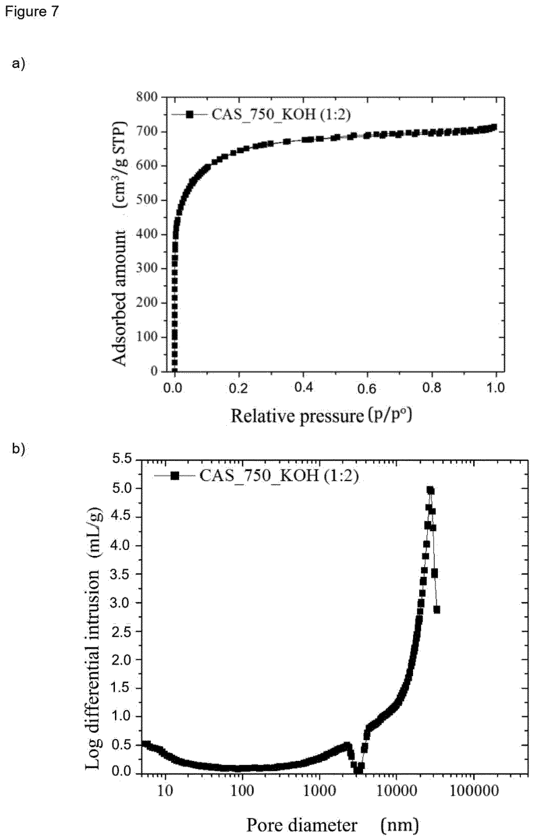

Figure 7 shows (a) the $N_2$ adsorption isotherm at -196°C and (b) the pore size distribution obtained by means of Hg porosimetry of the porous carbon obtained by the sintering of lactoserum powder described above. The measurement of the $N_2$ adsorption isotherm was performed in automatic volumetric equipment, prior degassing of the sample at 120°C in a residual vacuum of 0.1 mbar for 12 h. The pore size distribution by means of Hg porosimetry was assessed based on Hg intrusion in an automatic porosimeter in the pressure range of 0.1-227 MPa, prior degassing of the sample at 120°C in a residual vacuum of 0.1 mbar for 12 h. Table 5 lists the main textural parameters of the porous carbon obtained by the sintering of lactoserum powder previously described (CAS_750_KOH (1 :2)). Regarding the parameters derived from $N_2$ adsorption at -196°C, the total volume of pores $V_p$ is calculated at a relative pressure $p/p_0$ = 0.95. For the calculation of the BET surface or specific area $S_{BET}$, the Brunauer-Emmett-Teller model was used on the $N_2$ isotherm data. To calculate the volume of micropores $V_{micro}$, the Dubinin-Radushkevich model was used on the $N_2$ isotherm data. To calculate the volume of mesopores $V_{meso}$, the determined pore volume in the $N_2$ isotherm ($V_p$) was subtracted and $V_{micro}$, $d_{micro}$ and $d_{meso}$ correspond to the mode of micropore and mesopore size distribution, respectively, obtained using the Density Functional Theory (DFT) model applied to the $N_2$ isotherm data. The actual density value ($\rho_r$) was determined by means of He pycnometry. Regarding the textural parameters derived from Hg intrusion, $V_{Hg}$ is the total volume intruded, which corresponds to the total volume of pores larger than 4.4 nm. $V_{meso}$ is the Hg volume intruded into pores larger than 4.4 nm and smaller than 50 nm. $V_{macro}$ is the Hg volume intruded into pores larger than 50 nm. dp is the mode of pore distribution obtained by means of Hg intrusion. $\rho_{ap}$ is the bulk density measured by means of Hg intrusion. The porosity value is calculated using the ratio:

$$P = [1-( \rho_{ap} / \rho_r)]\cdot 100$$

This carbon possesses micropores, specifically a volume of micropores of 1.0 $cm^3/g$ and a BET area larger than 2400 $m^2/g$. Moreover, the monolith exhibits a volume of mesopores of 0.1 $cm^3/g$, most of them of a size between 2.5 and 10 nm. The monolith also has macropores with a size of around 18.5 $\mu$m.

With regard to the chemical composition of the CAS_750_KOH (1:2) monolith, it should be noted that it possesses a nitrogen content greater than 2% by weight and an oxygen content greater than 6% by weight, which corresponds mainly to acidic oxygenated groups as shown by the point of zero charge ($pH_{pzc}$) thereof of 4.85. The immediate analysis was carried out in a thermobalance with controlled atmosphere; in an experiment, 50 mg of lactoserum powder are heated to 850°C at a rate of 10°C/min in an atmosphere of 100 ml/min of $N_2$ for the calculation of moisture content and volatile substances. Once the maximum temperature (850°C) has been reached, the reaction atmosphere is changed to air (100 ml/min) and the percentage of ash in the sample is counted after 0.5 h. The elemental analysis for determining the contents of C, N, H, S and O was carried out in specific equipment for the quantification of these elements (LECOCHNS-932 and LECO-TF-900). The point of zero charge ($pH_{pzc}$) was obtained through a process consisting of suspending 250 mg of sample in a known volume of distilled water, which was being daily increased, subjecting the suspension to constant stirring in a closed container and performing daily measurements of the pH value of the suspension. As the volume of distilled water in the suspension is increased, the pH value thereof changes until a constant value is reached that does not change when adding more distilled water. The $pH_{pzc}$ value is the value of that constant pH.

Table 5: Textural parameters of the porous carbon obtained by the sintering of wet lactoserum powder described above.

| N2 adsorption at -196°C | $S_{BET}$ | $V_{micro}$ | Vmeso | $V_p$ | dmicro | dmeso | $\rho_r$ |
|---|---|---|---|---|---|---|---|
| | $(m^2/g)$ | $(cm^3/g)$ | $(cm^3/g)$ | $(cm^3/g)$ | (nm) | (nm) | $g/cm^3$ |
| CAS_750_KOH (1:2) | 2440 | 1.0 | 0.1 | 1.1 | 1.3 | 2.8 | 2.27 |
| Hg intrusion | Vmeso | $V_{macro}$ | $d_p$ | $\rho_{ap}$ | $V_{hg}$ | Porosity | |
| | $(cm^3/g)$ | $(cm^3/g)$ | (nm) | $g/cm^3$ | $(cm^3/g)$ | (%) | |
| CAS_750_KOH (1:2) | 0.24 | 2.13 | 18004 | 0.38 | 2.38 | 82 | |

Table 6 Chemical analysis of the porous carbon obtained by the sintering of wet lactoserum powder described above.

| | CAS_750_KOH (1:2) |
|---|---|
| Immediate Analysis (%) | |
| Moisture | 9.6 |
| Ashes | 3.0 |
| Volatile substances | 7.9 |
| Fixed carbon | 79.5 |
| Elemental Analysis (%) | |
| C | 88.3 |
| H | 0.5 |
| N | 2.3 |
| O | 6.7 |
| S | 0.2 |
| $pH_{PZC}$ | 4.85 |

**Example 4.**

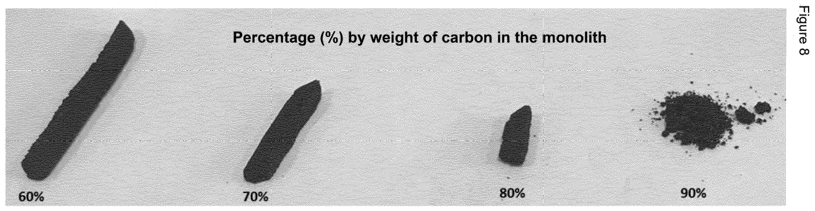

Figure 8 shows different monoliths produced by the sintering at 500°C of mixtures of wet lactoserum powder and charcoal powder in proportions ranging from 30% by weight to 70% by weight in the initial mixture. Given that the loss of volatile substance of lactoserum at this temperature is 70% by weight and that charcoal does not give off volatile substances at this temperature, the proportion of charcoal in the resulting monoliths can be up to 80% by weight, such that the resulting shaped carbon monolith would exhibit the properties of the charcoal that has been used in the mixture.

**Example 5.**

This example shows the molecular sieve features of a porous carbon monolith that is obtained by subjecting wet lactoserum powder to a heat treatment consisting of heating said wet lactoserum powder in a mould up to 800°C, using a heating ramp of 10°C/min and a flow rate of $N_2$ of 100 ml/min during. Lastly, it is cooled to room temperature using a flow rate of $N_2$ of 100 ml/min.

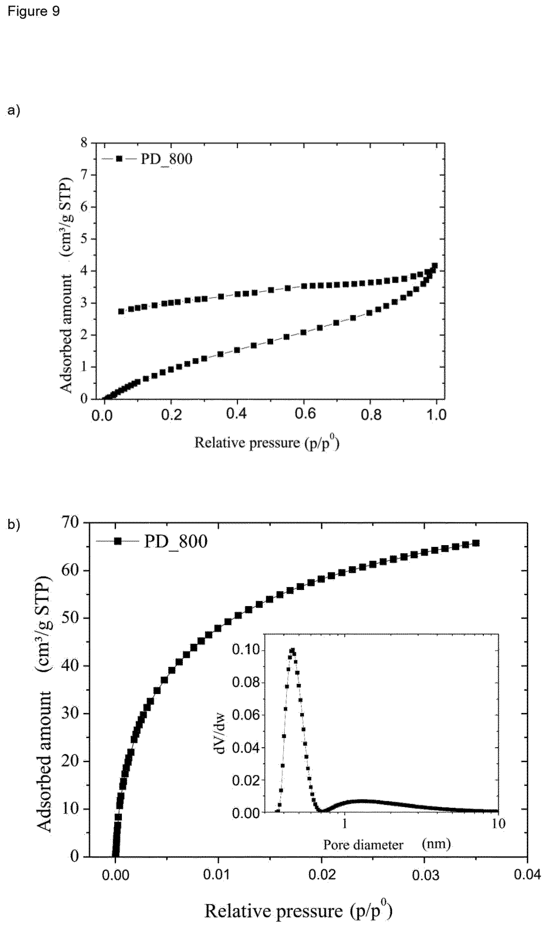

Figure 9 shows (a) the $N_2$ adsorption isotherm at -196°C and (b) the $CO_2$ adsorption isotherm at 0°C corresponding to a monolith obtained by the sintering of lactoserum powder described above at 800°C. Both adsorption isotherms were performed in automatic volumetric equipment, prior degassing of the sample at 120°C in a residual vacuum of 0.1 mbar for 12 h. The pore size distribution was assessed from the $CO_2$ adsorption isotherm at 0°C from a model based on Density Functional Theory (DFT). The result of said distribution is provided as a detail included in Figure 9 (b).

Figure 9 (a) clearly shows that the monolith obtained by the sintering of lactoserum at 800°C does not adsorb nitrogen at -196°C. However, the same material reaches $CO_2$ adsorption volumes at 0°C that are high (65 $cm^3$/g) at a relative pressure of 0.034. These results indicate that the monolith obtained herein can be used as a molecular sieve for the separation of mixtures of $N_2/O_2$ or $CO_2/CH_4$, among others.

**Claims**

1.   A shaped carbon monolith, obtained from lactoserum powder with a moisture content between 2% and 10% by weight, **characterised in that** it has:

   • a porosity between 50% and 85%,
   • macropores with a size between 50 $\mu$m and 500 $\mu$m,
   • mesopores with a size between 2 nm and 50 nm,
   • micropores with a size less than or equal to 2 nm, preferably between 0.1 nm and 2 nm, and
   • a percentage by weight of nitrogen between 1% and 4%.

2.   The monolith according to claim 1, wherein the carbon monolith is **characterised in that** it further comprises a plurality of metals in a metallic state selected from Ni, Cu, Zn, Fe, Co, Ti, Pd, Mn, Rh, Ir, Ru, Os, V, Ag, Au, Pt, Cd, Mo, Al and a combination thereof, wherein said metals are homogeneously distributed in the monolith.

3.   A method for manufacturing the shaped carbon monolith according to any of claims 1 or 2, **characterised in that** it comprises the following steps:

   a) shaping, with the aid of a mould, lactoserum powder with a particle size between 5 $\mu$m and 200 $\mu$m and a moisture content between 2% and 10% by weight; and b) sintering the product obtained in step (a), wherein the sintering of step (b) is carried out in three steps (b1), (b2) and (b3),

      • in step (b1) a first temperature $T_1$ less than or equal to 300°C is reached,
      • in step (b2) a second temperature $T_2$ greater than the temperature $T_1$ and less than 3000°C is reached, wherein (b2) is carried out in the presence of an inert gas selected from $N_2$, Ar and He
      • and in step (b3) micropores are generated

         ∘ by impregnating the product obtained in step (b1) with an activating agent selected from KOH, NaOH, $K_2CO_3$, $Na_2CO_3$, $ZnCl_2$ and $H_3PO_4$,
         ∘ and/or wherein the product obtained after step (b2) is put in contact with an oxidising atmosphere selected from water vapour or $CO_2$.

4.   The method according to claim 3, wherein, in step (a) a mixture is added consisting of lactoserum powder and a first material selected from mineral coal, charcoal, activated carbon, carbon black, graphite, a carbon aerogel, carbon fibres, synthetic carbon fibres, carbon nanotubes, graphene oxide, graphene, or a combination thereof.

5. The method according to any of claims 3 or 4, wherein the first material is in a percentage by weight between 1% and 90% in the mixture of step (a).

6. The method according to any of claims 3 to 5, wherein, in step (b1), a first temperature $T_1$ between 120°C and 300°C is reached.

7. The method according to any of claims 3 or 6, wherein step (b2) is carried out without a mould.

8. A method for manufacturing the shaped carbon monolith according to claim 2, **characterised in that** it comprises

   • the method according to any of claims 3 to 7, wherein, in step (a), a second material is added selected from a metal, a metal oxide, a metal salt, an organometallic compound or a combination thereof,

   wherein the metal forming said metal oxide, said metal salt or said organometallic compound is selected from Ni, Cu, Zn, Fe, Co, Ti, Pd, Mn, Rh, Ir, Ru, Os, V, Ag, Au, Pt, Cd, Mo, Al and a combination thereof.

9. A use of the shaped carbon monolith according to claim 1 as scaffold for growing cell tissues, preferably bone or cartilage.

10. A use of the shaped carbon monolith according to claim 1 as a molecular sieve.

11. A use of the shaped carbon monolith according to any of claims 1 or 2 as a filter for chemical compounds present in gaseous currents or liquid effluents.

12. A use of the shaped carbon monolith according to claim 1 as a catalyst support.

13. A use of the shaped carbon monolith according to claim 2, as a catalyst.

Figure 1

Figure 2

Figure 3

Figure 4

a)

b)

Figure 5

1 cm edge cube of **cordierite**  |  Fraction > 3 mm **Ic = 29.5%**  |  Fraction < 0.5 mm **Ia = 22.1%**

1 cm edge cube of **Mouldable porous carbon sintered at 450°C**  |  Fraction > 0.3 mm **Ic = 81.8%**  |  Fraction < 0.5 mm **Ia = 15.3%**

1 cm edge cube of **Mouldable porous carbon sintered at 800°C**  |  Fraction > 3 mm **Ic = 97.1%**  |  Fraction < 0.5 mm **Ia = 2.4%**

Figure 6

a)

b)

Figure 7

a)

b)

Figure 8

Figure 9

a)

b)

| | INTERNATIONAL SEARCH REPORT | International application No. |
|---|---|---|
| | | PCT/ES2020/070443 |

### A. CLASSIFICATION OF SUBJECT MATTER

See extra sheet

According to International Patent Classification (IPC) or to both national classification and IPC

### B. FIELDS SEARCHED

Minimum documentation searched (classification system followed by classification symbols)
C01B, B01J

Documentation searched other than minimum documentation to the extent that such documents are included in the fields searched

Electronic data base consulted during the international search (name of data base and, where practicable, search terms used)

INVENES, EPODOC, WPI, TXPUS, TXPWO, TXPCN, TXPSPJ, TXPSPK, NPL, COMPENDEX, XPESP, INSPEC, GOOGLE, GOOGLE PATENT, GOOGLE SCHOLAR.

### C. DOCUMENTS CONSIDERED TO BE RELEVANT

| Category* | Citation of document, with indication, where appropriate, of the relevant passages | Relevant to claim No. |
|---|---|---|
| X | US 2011129640 A1 (BEALL GEORGE HALSEY ET AL.) 02/06/2011, paragraphs [0035], [0041], [0044-0052], [0059-0060], [0072], claims 1, 2, 17, 20. | 1,2,9-13 |
| X | CN 104399434 A (FANCHANG BEISI PRODUCTIVITY PROMOTION CT CO LTD) 11/03/2015, abstract [on line] retrieved from EPODOC/EPO and WPI/DERWENT, claim 1. | 1,2,9-13 |
| A | WO 2016005481 A1 (KNAUF INSULATION SPRL ET AL.) 14/01/2016, claims 1-4. | 1-13 |

☒ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
|---|---|
| 29/11/2020 | **(30/11/2020)** |

| Name and mailing address of the ISA/ | Authorized officer |
|---|---|
| OFICINA ESPAÑOLA DE PATENTES Y MARCAS<br>Paseo de la Castellana, 75 - 28071 Madrid (España)<br>Facsimile No.: 91 349 53 04 | M. González Rodríguez<br><br><br>Telephone No. 91 3493290 |

Form PCT/ISA/210 (second sheet) (January 2015)

**EP 4 043 395 A1**

## INTERNATIONAL SEARCH REPORT

| | |
|---|---|
| International application No. | |
| PCT/ES2020/070443 | |

C (continuation).                    DOCUMENTS CONSIDERED TO BE RELEVANT

| Category * | Citation of documents, with indication, where appropriate, of the relevant passages | Relevant to claim No. |
|---|---|---|
| A | WO 9007541 A1 (FERRETTI ARTHUR) 12/07/1990, claims 1,3, 8-10. | 1-13 |
| A | CN 108341683 A (TANG LINYUAN) 31/07/2018, abstract [on line] retrieved from   EPODOC/EPO and WPI/DERWENT, claims 1 and 3. | 1-13 |
| A | WO 2011006660 A1 (KISS JOHANN ET AL.) 20/01/2011, abstract [on line] retrieved from EPODOC/EPO and WPI/DERWENT. | 1-13 |

Form PCT/ISA/210 (continuation of second sheet) (January 2015)

24

## INTERNATIONAL SEARCH REPORT

Information on patent family members

International application No.

PCT/ES2020/070443

| Patent document cited in the search report | Publication date | Patent family member(s) | Publication date |
|---|---|---|---|
| US2011129640 A1 | 02.06.2011 | NONE | |
| CN104399434 A | 11.03.2015 | CN104399434B B | 17.08.2016 |
| WO2016005481 A1 | 14.01.2016 | US2019085204 A1<br>US2017210945 A1<br>EP3166992 A1 | 21.03.2019<br>27.07.2017<br>17.05.2017 |
| WO9007541 A1 | 12.07.1990 | US5371194 A<br>US5582682 A<br>CA2005321 A1<br>AU4804190 A | 06.12.1994<br>10.12.1996<br>28.06.1990<br>01.08.1990 |
| CN108341683 A | 31.07.2018 | NONE | |
| WO2011006660 A1 | 20.01.2011 | DE102009033362 A1<br>EP2464612 A1<br>EP2464612 B1 | 03.02.2011<br>20.06.2012<br>04.07.2018 |

Form PCT/ISA/210 (patent family annex) (January 2015)

**INTERNATIONAL SEARCH REPORT**

International application No.

PCT/ES2020/070443

CLASSIFICATION OF SUBJECT MATTER

*C01B32/05* (2017.01)
*B01J35/10* (2006.01)
*B01J20/28* (2006.01)